Europäisches Patentamt

European Patent Office

Office européen des brevets

(11) Numéro de publication : **0 044 004**
**B1**

# (12) FASCICULE DE BREVET EUROPÉEN

(45) Date de publication du fascicule du brevet :
05.06.85

(21) Numéro de dépôt : 81105167.1

(22) Date de dépôt : 03.07.81

(51) Int. Cl.⁴ : **B 01 D 45/08, F 22 B 37/28**

(54) **Dispositif séparateur de gouttelettes de liquide entraînées dans un gaz ou une vapeur.**

(30) Priorité : 10.07.80 FR 8015364

(43) Date de publication de la demande :
20.01.82 Bulletin 82/03

(45) Mention de la délivrance du brevet :
05.06.85 Bulletin 85/23

(84) Etats contractants désignés :
BE CH DE FR GB IT LI SE

(56) Documents cités :
FR-A- 1 522 987
FR-A- 2 045 854
FR-A- 2 431 874

(73) Titulaire : STEIN INDUSTRIE Société anonyme dite:
19-21, Avenue Morane Saulnier B.P. 74
F-78141 Velizy-Villacoublay (FR)

(72) Inventeur : Marjollet, Jacques
37, Quai de Valmy
F-75010 Paris (FR)
Inventeur : Mevel, Jean-Claude
10, rue de Franche Comté
F-91400 Les Ulis (FR)
Inventeur : Palacio, Gérard
11, boulevard de l'Orangerie
F-95160 Montmorency (FR)
Inventeur : Tondeur, Gérard
2, rue du Capitaine Fonck
F-78140 Velizy-Villacoublay (FR)

(74) Mandataire : Weinmiller, Jürgen et al
Zeppelinstrasse 63
D-8000 München 80 (DE)

Jouve, 18, rue St-Denis, 75001 Paris, France

## Description

La présente invention concerne un dispositif séparateur de gouttelettes de liquide entraînées dans un gaz ou une vapeur.

Le document FR-A-2 431 874 décrit un capteur de gouttes de liquide présentes dans un gaz comportant des plaques verticales parallèles de profil ondulé comportant en aval de leur zone ondulée sur l'écoulement du gaz chargé de gouttes des rainures verticales de forme rectangulaire, destinées à arrêter et à assurer l'évacuation vers une cuvette de recueil de la pellicule de liquide entraînée vers le bord de sortie des plaques.

Les rainures de ce document sont pratiquées par fraisage dans des plaques nécessairement épaisses.

La présente invention a pour but de procurer un dispositif séparateur de gouttelettes qui soit de fabrication simple et peu coûteuse, et qui évite pratiquement tout entraînement de gouttelettes dans le gaz ou la vapeur évacués en aval du dispositif, tant le long du bord inférieur que du bord supérieur des lames.

Le dispositif selon l'invention comprend :

a) des paquets de lames ondulées parallèles entre lesquelles le gaz ou la vapeur chargés de gouttelettes sont amenés à circuler, intégrés dans des panneaux fixés sur tous leurs bords à une structure porteuse, ces lames étant munies

i) sur leur bord inférieur d'encoches de faible hauteur par rapport à celle des lames, se raccordant au bord inférieur selon un angle vif, de façon que les gouttelettes de liquide entraînées le long du bord inférieur des lames tombent du bord des encoches dans des gouttières de recueil du liquide ruisselant sur les lames, au bas de celles-ci, et

ii) sur leur bord supérieur d'au moins une échancrure, une barre transversale étant engagée dans les échancrures de l'ensemble des lames d'un paquet et soudée sur la paroi supérieure du panneau correspondant, de façon à former un obstacle à tout contournement du paquet de lames par la vapeur humide, et

b) des tubes d'évacuation du liquide recueilli dans les gouttières.

Il répond en outre de préférence à au moins l'une des caractéristiques suivantes :

— Les gouttières sont dans leur partie disposée en aval des lames, du côté de la sortie de la vapeur sèche et du liquide séparés, de section droite sensiblement semi-circulaire.

— Le plan diamétral parallèle au plan passant par les génératrices extrêmes de la partie des gouttières en aval des lames fait un angle d'environ 35° avec la verticale.

— Les tubes d'évacuation du liquide sont reliés aux gouttières en leur milieu, et celles-ci présentent de part et d'autre de ce milieu une légère pente négative dirigée vers celui-ci.

— Une tôle perforée d'égalisation du débit de vapeur humide, disposée en amont des panneaux de support des lames ondulées parallèles, est également intégrée à la structure porteuse.

— Il est décrit ci-après, à titre d'exemple et en référence aux figues annexées, un dispositif selon l'invention pour la séparation de gouttelettes d'eau contenues dans de la vapeur humide.

La figure 1 représente en élévation avec arrachement partiel, une partie d'un tel dispositif.

La figure 2 représente une coupe selon l'axe II-II de la figure 1.

La figure 3 représente schématiquement une lame ondulée avec une échancrure de son bord supérieur, et des encoches sur son bord inférieur, évitant le contournement par la vapeur humide et l'entraînement d'eau séparée le long de son bord inférieur.

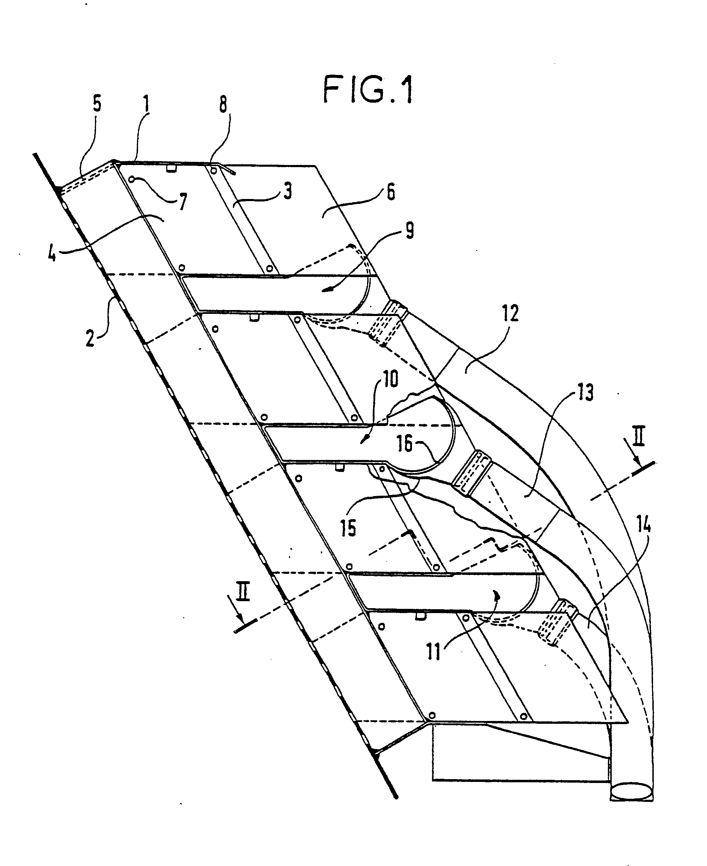

Dans la figure 1, des panneaux 1 de fixation des lames ondulées parallèles telles que 4 sont soudés à une structure porteuse dont on aperçoit des flancs 3. Bien entendu, la structure porteuse comporte d'autres éléments perpendiculaires au plan de la figure. A l'avant et à l'arrière des tiges telles que 7, 8, engagées dans des trous des tôles perforées, et perpendiculaires au plan de la figure, les maintiennent solidaires les unes des autres et des flancs 3. En avant des panneaux, une tôle perforée 2 destinée à répartir également de débit de vapeur humide entre les différents paquets de lames ondulées parallèles, est également soudée à des tôles 5 soudées à la structure porteuse. A l'arrière des paquets de lames ondulées, des tôles planes 6 régularisent l'écoulement de la vapeur sèche.

Des gouttières 9, 10, 11 de section droite sensiblement semi-circulaire, et dont le plan diamétral parallèle au plan passant par leurs bords supérieur et inférieur c. à d. par les génératrices extrêmes de la partie de gouttière en aval des lames fait un angle d'environ 35° avec la verticale, recueillent l'eau arrêtée par les ondulations des lames et ruisselant sur celles-ci. Des tubes d'évacuation 12, 13, 14 débouchant au milieu des gouttières assurent l'évacuation de l'eau vers un récipient de recette. Afin de favoriser l'écoulement de l'eau dans les gouttières vers les tubes d'évacuation, celles-ci ne sont pas horizontales, mais présentent une légère pente négative vers leur milieu, comme on le voit pour la gouttière 10 dans la partie arrachée, où le profil 15 de la gouttière en son point milieu est un peu au-dessous du profil 16 dans le plan de la coupe.

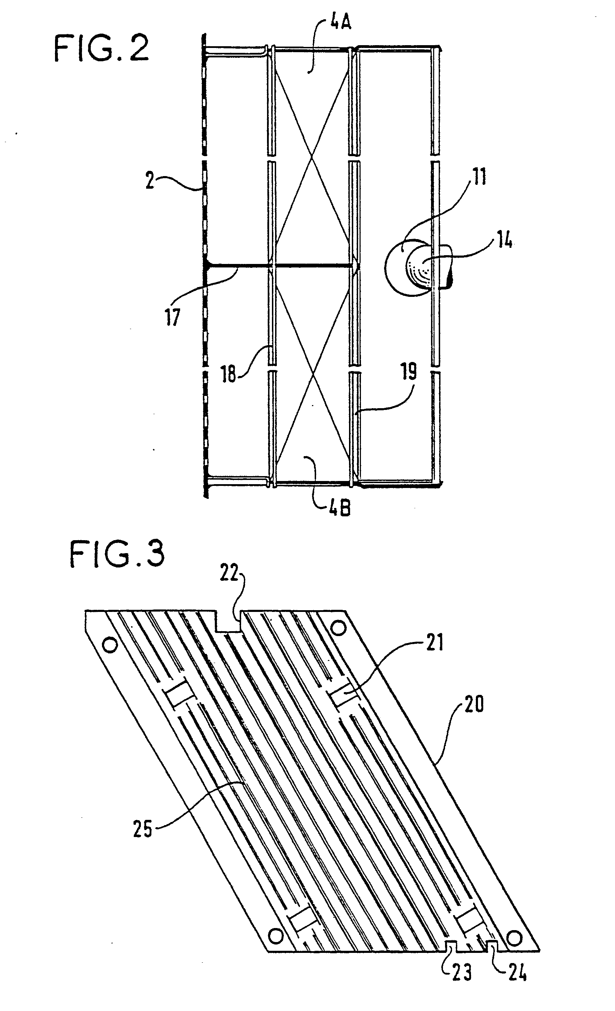

La coupe de la figure 2 montre de façon plus claire les panneaux 1 entourant les paquets de lames ondulées adjacents 4A, 4B, séparés par une cloison 17, ainsi que les tiges 18, 19 de solidarisation des lames ondulées parallèles.

La figure 3 représente une lame ondulée 20, dont les ondulations telles que 25 n'ont pas été représentées en totalité pour plus de clarté. Des bossages représentés schématiquement en 21 permettent l'appui des lames les unes sur les autres. Une échancrure 22 du bord supérieur permet l'enfilement d'une barre transversale, qui est soudée sous la paroi supérieure et empêche le contournement de la vapeur humide au-dessus des lames ondulées. Sur le bord inférieur, des encoches 23, 24 évitent l'entraînement par le courant de vapeur le long de ce bord d'un film d'eau qui y adhérerait par capillarité et serait repris ensuite dans la vapeur sèche.

L'invention s'applique notamment aux séparateurs-surchauffeurs de vapeur d'eau dans les centrales de production d'énergie électrique par détente de vapeur d'eau dans des turbines en plusieurs étages de pression

### Revendications

1. Dispositif séparateur de gouttelettes de liquide entraînées dans un gaz ou une vapeur, comprenant :

a) des paquets de lames ondulées parallèles (4, fig. 1) entre lesquelles le gaz ou la vapeur chargés de gouttelettes sont amenés à circuler, intégrés dans des panneaux (1, fig. 1) fixés sur tous leurs bords à une structure porteuse, ces lames étant munies

i) sur leur bord inférieur d'encoches (23, 24, fig. 3) de faible hauteur par rapport à celle des lames (4), se raccordant au bord inférieur selon un angle vif, de façon que les gouttelettes de liquides entraînées le long du bord inférieur des lames (4) tombent du bord des encoches dans des gouttières (9, 10, 11, fig. 1) de recueil du liquide ruisselant sur les lames, au bas de celles-ci, et

ii) sur leur bord supérieur d'au moins une échancrure (22, fig. 3), une barre transversale étant engagée dans les échancrures (22) de l'ensemble des lames d'un paquet et soudée sur la paroi supérieure du panneau (1) correspondant, de façon à former un obstacle à tout contournement du paquet de lames par la vapeur humide, et

b) des tubes (12, 13, 14, fig. 1) d'évacuation du liquide recueilli dans les gouttières.

2. Dispositif selon la revendication 1, caractérisé en ce que les gouttières (9, 10, 11) sont dans leur partie disposée en aval des lames (4), du côté de la sortie de la vapeur sèche et du liquide séparés, de section droite sensiblement semi-circulaire.

3. Dispositif selon la revendication 2, caractérisé en ce que le plan diamétral parallèle au plan passant par les génératrices extrêmes de la partie des gouttières (9, 10, 11) en aval des lames (4) fait un angle d'environ 35° avec la verticale.

4. Dispositif selon l'une des revendications 1 à 3, caractérisé en ce que les tubes (12, 13, 14) d'évacuation du liquide sont reliés aux gouttières (9, 10, 11) en leur milieu, et en ce que celles-ci présentent de part et d'autre de ce milieu une légère pente négative dirigée vers celui-ci.

5. Dispositif selon l'une des revendications 1 à 4, caractérisé en ce qu'une tôle perforée d'égalisation du débit de vapeur humide (2, fig. 1), disposée en amont des panneaux (1) de support des lames ondulées parallèles (4), est également intégrée à la structure porteuse.

### Claims

1. A device for separating droplets of liquid contained in a gas or a vapour, comprising :

a) piles of parallel corrugated wafers (4, fig. 1) between which the droplet charged gas or liquid is made to flow, said piles being integrated in panels (1, fig. 1) which are fixed round all their edges to a support structure, these wafers being furnished

i) on their lower edge with notches (23, 24, fig. 3) of low height with respect to that of the wafers (4), joining the lower edge at an acute angle, so that the droplets of liquid entrained along the lower edge of the wafers (4) drop from the corner of the notches into gutters (9, 10, 11, fig. 1) located under the wafers and collecting the liquid flowing over the wafers, and

ii) on their upper edge with at least one groove (22, fig. 3), a transverse bar being engaged in the grooves (22) of the assembly of wafers of a pile and welded to the upper wall of the corresponding panel (1) so as to form an obstacle to any bypassing of the pile of wafers by the wet vapour, and

b) tubes (12, 13, 14, fig. 1) for evacuating the liquid collected in the gutters.

2. A device according to claim 1, characterized in that the gutters (9, 10, 11) have a substantially semi-circular cross section in their zone disposed downstream of the wafers (4), on the side of the outlet of the dry vapour and of the liquid separated therefrom.

3. A device according to claim 2, characterized in that the diametrical plane which is parallel to the plane passing through the extreme generatrices of the zone of the gutters (9, 10, 11) downstream of the wafers (4) includes an angle of about 35° with the vertical direction.

4. A device according to one of the claims 1 to 3, characterized in that the tubes (12, 13, 14) for the evacuation of the liquid are connected to the gutters (9, 10, 11) in their central zone, and in that the latters present on both sides of this central zone a slight negative slope directed towards the latter.

5. A device according to one of the claims 1 to 4, characterized in that e perforated metal sheet for equalizing the flow of wet vapour (2, fig. 1) disposed upstream of the support panels (1) of the corrugated parallel wafers (4) is also integrated into the support structure.

### Patentansprüche

1. Separationsvorrichtung für Flüssigkeitströpfchen, die in einem Gas oder einem Dampf mitgerissen werden, mit :

a) Paketen von parallelen gewellten Plättchen (4, Fig. 1), zwischen denn das Gas oder der Dampf, die mit Tröpfchen angereichert sind, zirkulieren, wobei die Pakete in Platten (1, Fig. 1) integriert sind, welche an allen ihren Rändern an einer Stützstruktur befestigt sind,

i) wobei die Plättchen an ihrem unteren Rand Kerben (23, 24, Fig. 3) von geringer Höhe in bezug auf die der Plättchen (4) aufweisen, die in den unteren Rand über einen spitzen Winkel übergehen, so daß die Flüssigkeitströpfchen, die entlang des unteren Rands der Plättchen (4) verlaufen, vom Rand der Kerben in unterhalb der Plättchen verlaufende Rinnen (9, 10, 11, Fig. 1) zum Auffangen der auf den Plättchen rinnenden Flüssigkeit fallen, und

ii) wobei die Plättchen an ihrem oberen Rand mindestens einen Ausschnitt (22, Fig. 3) aufweisen und ein Querstab in die Ausschnitte (22) der Gesamtheit von Plättchen eines Pakets eingeführt und auf die obere Wand der entsprechenden Platte (1) aufgeschweißt ist, so daß er ein Hindernis für jede Umgehung des Plättchenpakets durch den Naßdampf bildet, und

b) mit Rohren (12, 13, 14, Fig. 1) zum Fortleiten der in den Rinnen aufgefangenen Flüssigkeit.

2. Vorrichtung nach Anspruch 1, dadurch gekennzeichnet, daß die Rinnen (9, 10, 11) in ihrem stromabwärts hinter den Plättchen (4) liegenden Bereich auf der Seite des Ausgangs des Trockendampfes und der davon getrennten Flüssigkeit einen im wesentlichen halbkreisförmigen Querschnitt aufweisen.

3. Vorrichtung nach Anspruch 2, dadurch gekennzeichnet, daß die diametrale Ebene, die parallel zu der durch die äußersten Mantellinien des stromabwärts hinter den Plättchen (4) liegenden Bereichs der Rinnen (9, 10, 11) verlaufenden Ebene liegt, einen Winkel von etwa 35° mit der Senkrechten einschließt.

4. Vorrichtung nach einem der Ansprüche 1 bis 3, dadurch gekennzeichnet, daß die Rohre (12, 13, 14) zum Fortleiten der Flüssigkeit mit den Rinnen (9, 10, 11) in deren Mitteverbunden sind, und daß diese Rinnen auf beiden Seiten dieser Mitte eine leichte zur Mitte hin gerichtete negative Neigung aufweisen.

5. Vorrichtung nach einem der Ansprüche 1 bis 4, dadurch gekennzeichnet, daß ein Lochblech zur Vergleichmäßigung der Naßdampf-Durchsatzes (2, Fig. 2), das oberhalb der Stützplatten (1) für die parallelen gewellten Plättchen angeordnet ist, ebenfalls in die Stützstruktur integriert ist.

# FIG.1

FIG.2

FIG.3